# EUROPEAN PATENT SPECIFICATION

(11) **EP 0 958 534 B1**
(45) Date of publication and mention of the grant of the patent: **29.05.2002**
(21) Application number: 98902178.7
(22) Date of filing: 04.02.1998
(51) Int. Cl.: G05D 23/13

(54) **THERMOSTATIC MIXING VALVE**
THERMOSTATISCHES MISCHVENTIL
MITIGEUR THERMOSTATIQUE

(30) Priority: 06.02.1997 IT MI970238
(43) Date of publication of application: 24.11.1999
(73) Proprietor: Officina Meccanica Ruga Osvaldo, 28024 Gozzano (IT)
(72) Inventor: RUGA, Osvaldo, I-28024 Gozzano (IT)
(74) Representative: Concone, Emanuele
(86) International application number: IT9800016
(87) International publication number: WO9835280

(56) References cited:
- EP-A- 0 560 737
- DE-C- 3 118 003
- US-A- 4 349 149

## Description

The present invention relates to taps for mixing hot and cold water in sanitary facilities (wash-basins, showers, bathtubs, etc.), and in particular to a cartridge mixing valve provided with a thermostatic device suitable to maintain a constant water temperature.

It is known that conventional single-control mixing taps include a tap body with a cartridge mixing valve (hereinafter simply cartridge) removably inserted therein and a control lever for controlling a valve group, within the cartridge, made up of a pair of ceramic disks which adjust the flow of hot and cold water. This adjustment of the water, both in flow rate and in temperature, is carried out through the translation and rotation, respectively, of a mobile disk over an underlying fixed disk. In this way, the extent of aperture of the ports formed in said disks for the passage of hot and cold water is changed, and so is the ratio between hot water and cold water when they are mixed prior to the conveying to the tap mouth.

In order to maintain a constant temperature of the delivered water, both between two tap openings and during a same opening, it is possible to incorporate a thermostatic device in a conventional tap. Such a device acts downstream from the valve group by controlling the inflow of hot and cold water into the mixing chamber through respective ports. As it will be better explained further on, this control is carried out automatically by a thermosensitive bulb which causes the shifting of a slider suitable to change the aperture of said ports in the mixing chamber.

A first possible solution is to place the thermostatic device at the bottom of a common single-control mixer, i.e. below the valve group. This solution has several drawbacks both of installation, and of use and maintenance. First of all the assembly of the elements to be housed inside the tap body, the lower portion of the cartridge, is higher than in conventional cartridges, thus requiring a tap body which is higher than standard height. Secondly, the use of a single control for temperature and flow rate implies a difficult repeatability of temperature between two openings. Moreover, there is a poor precision in adjusting the temperature due to the limited travel of the single control, which generally has a maximum rotatory travel of 90° around the tap mouth (±45°).

A third kind of drawback occurs when it is necessary to reach the thermostatic device for its maintenance. As a matter of fact, the most frequent need is to clean the mixing chamber from possible encrustations and/or deposits which may jeopardize the correct operation of the device. This need stems from the fact that the slider travel is of a few tenths of millimeter (usually max. 0,6 mm), therefore even small-size impurities may prove detrimental. However, the position of the thermostatic device requires the complete disassembly of the cartridge and therefore of the valve group too. This implies the necessity of cutting off the water, both hot and cold, upstream from the tap by means of a general valve or the like.

Another known solution suitable to overcome some of the above-mentioned drawbacks is to separate the flow rate control from the temperature control and to place the thermostatic device above the valve group. The use of two separate controls allows to achieve a more precise adjustment of temperature through the rotation of a ring along a greater arc (up to 360°), and also without any problem of repeatability between two openings. Furthermore, the lower portion of the cartridge is small enough to be housed in a standard-size tap body. However, also this second solution is not free from drawbacks of installation, use and maintenance similar to the previous ones though to a lower degree.

First of all, the flow rate control is a horizontal rotating lever located above the ring for the temperature adjustment. This still implies a position of the flow rate control higher than in conventional taps, whereby even the use of a standard tap body results in a tap having a greater overall height. Moreover, the above-described arrangement makes it difficult to reach the ring for the temperature adjustment, since the user has to insert his hand between the tap mouth and the lever above.

Secondly, the thermostatic device is located between the flow rate control and the valve group controlled by the latter. As a result, the flow rate adjustment is necessarily transmitted by a connection which passes through the thermostatic device, which is possibly used directly as a transmission means. In any case, the more or less close coupling between the flow rate control and the temperature control leads to a mutual interference which may affect the device operation. In other words, when changing the flow rate it may happen that also the temperature is changed and vice versa. Moreover, the thermostatic device is stressed also by loads not depending on its specific operation.

Finally, the above-mentioned third kind of drawback is still present as far as the cleaning and maintenance of the thermostatic device are concerned. In fact, since the kinematic chain which transmits the flow rate adjustment has to be removed in order to reach the thermostatic device, it is still necessary to disassemble completely the cartridge and thus to cut off the water upstream from the tap.

Therefore the object of the present invention is to provide an improved cartridge suitable to overcome the above-mentioned drawbacks.

This object is achieved by means of a cartridge having the characteristics disclosed in claim 1.

A first advantage of the present cartridge is that it makes easy to reach the thermostatic device, without requiring neither the complete disassembly of the cartridge nor the cutting off of the water upstream from the tap.

A second advantage of the cartridge according to the present invention is to make the flow rate and temperature controls completely independent, whereby no mutual interference is possible.

A third advantage of this cartridge stems from the arrangement of the coupling of the temperature control at the top, which results in greater ease of adjustment of the temperature and lower overall height of the tap.

Still another advantage of the present invention is a greater ease of adjustment of the flow rate, since the relevant control acts directly on the mobile disk without having to drag other members and therefore with a lower friction.

A further advantage of this cartridge is that it is manufactured with a simplified structure made up of less pieces, which results in lower production and assembly costs.

These and other advantages and characteristics of the cartridge according to the present invention will be clear to those skilled in the art from the following detailed description of an embodiment thereof, with reference to the annexed drawings wherein:
Fig. 1 is a schematic side view showing a tap which includes a cartridge according to the invention;
Fig.2 is an exploded, partially sectional, side view of the members which make up the cartridge of the above-mentioned tap;
Fig. 3 is a schematic, partially sectional, side view showing the members of fig.2 in an assembled state;
Fig. 4 is a schematic, partially sectional, side view showing a subassembly of the cartridge of fig.3;
Fig. 5 is an exploded, partially sectional, side view of a variation in some of the members of fig.2;
Fig. 6 is a front view of the member for controlling the mobile disk; and
Figs.7a, 7b and 7c are top plan views of the disks making up the valve group.

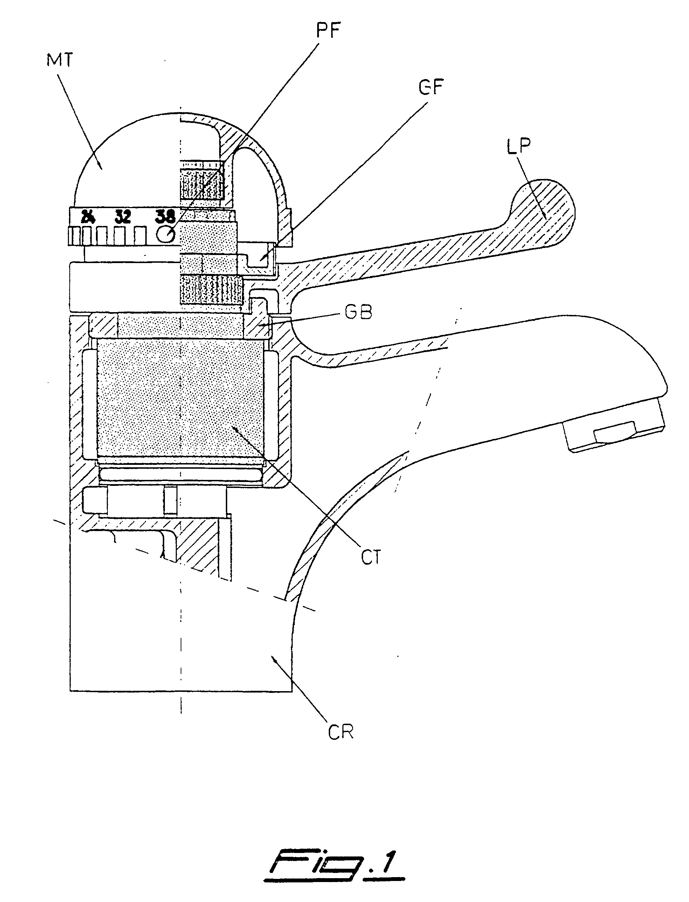

With reference to fig. 1, there is seen that a thermostatic cartridge CT according to the present invention is inserted in a conventional tap body CR and secured therein by a locking ring GB, which abuts on the top of the case of the lower portion of cartridge CT. On the upper portion of cartridge CT, which projects out of body CR, there are mounted a knob MT for the temperature adjustment and a lever LP for the flow rate adjustment.

Knob MT consists of a spherical bowl, fixed at the top of cartridge CT, provided along its peripheral edge with reference notches which in combination with a fixed reference ring GF, keyed therebelow, show the temperature setting. At the 38°C setting there is also provided a stop button PF with an anti-scald function, i.e. such as to prevent the unintentional setting of an excessive temperature. Lever LP for opening/closing the tap is in turn keyed onto cartridge CT, below ring GF and rotatably inserted between the latter and the tap body CR.

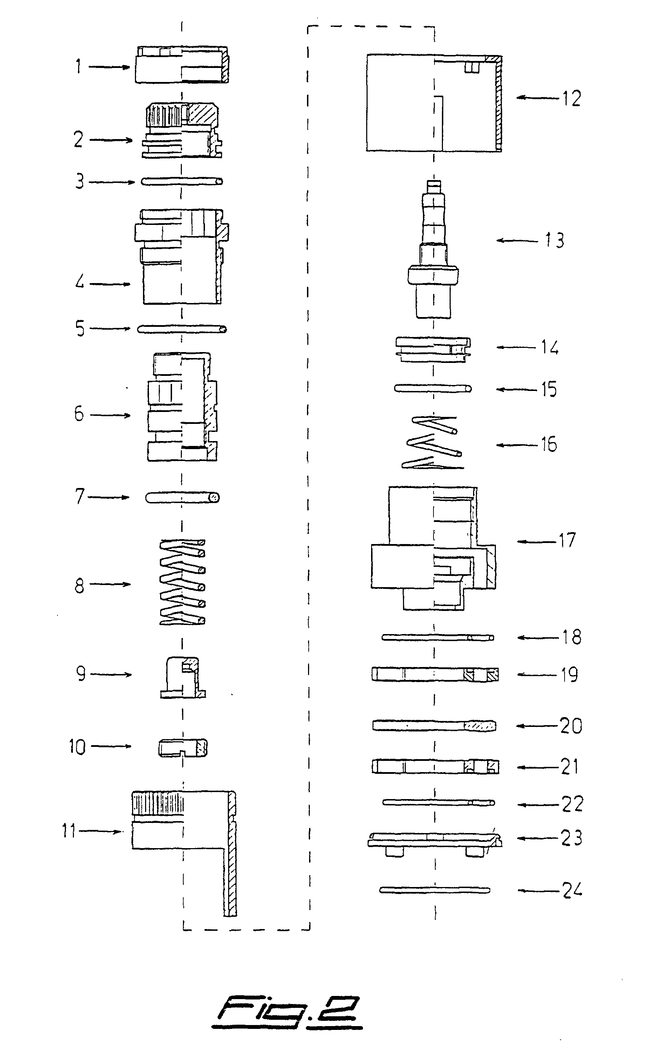

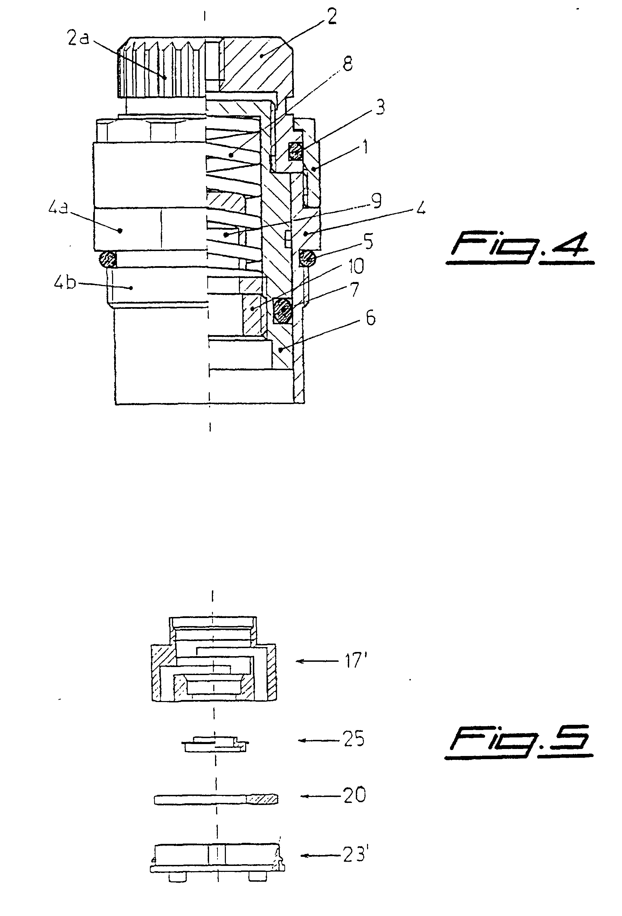

With reference to figs. 2, 3 and 4, the members which make up the thermostatic cartridge CT will now be illustrated in detail. The cartridge is divided into two subassemblies, as it will be better explained further on, the first of which includes the members numbered from I to 10 (fig.4) and the second one the members from 11 to 24.

The first subassembly includes a ring I threaded on the inside so as to rotatably retain a grooved cover 2, together with a relevant circular gasket (O-ring) 3, at the top of a sleeve 4 by means of a first external upper thread on said sleeve 4. Another O-ring 5 in externally inserted on sleeve 4 in a relevant seat. Through sleeve 4 there is inserted an adjusting bar 6, with a relevant O-ring 7, provided at the top with an external thread which engages a corresponding internal thread on cover 2. Bar 6 is hollow but closed at the top, and internally receives in turn a spring 8 and a cap 9 retained from below by an insert 10. Insert 10 is externally threaded so as to engage a corresponding internal thread on bar 6, whereby it is possible to calibrate the thermostatic device by adjusting the compression of spring 8 which pushes cap 9.

As clearly shown in fig.4, this group of members makes up a first subassembly called hereinafter "stud". Referring to fig. 1, there is seen that on said stud there are mounted knob MT, at an external groove 2a on cover 2, and the reference ring GF, at a polygonal coupling 4a. This coupling 4a is formed on the outside of sleeve 4, just above the seat of O-ring 5 and a second external thread 4b which performs the coupling of the stud with the second subassembly of cartridge CT described herebelow.

This second subassembly includes a control member 11, better described further on, and a cylindrical case 12 containing the other members of the thermostatic device and of the valve group. In particular, a thermostatic member 13 is inserted from above through a disk-shaped perforated slider 14, provided with a relevant external O-ring 15, and the whole is inserted together with a lower spring 16 into a body 17. Below the latter there is arranged the valve group, better described further on, which includes an upper gasket 18, a fixed upper disk 19, a mobile central disk 20, a fixed lower disk 21 and a lower gasket 22 (identical with gasket 18). Case 12 is closed at the bottom by a base 23, below which a relevant gasket 24 is arranged for the mounting into the tap body CR.

The presence of three disks 19, 20, 21 is intended to achieve the watertight scaling between mutually moving members made of the same material, whereas the sealing between fixed members may also provide different materials. In practice, disk 20 is mobile with respect to disks 19, 21 and they are all made of a ceramic material; disks 19, 21 are in turn fixedly sealed (by gaskets 18, 22) against body 17 and base 23, respectively, which are made of metal, generally brass. The direct mobile sealing of the ceramic mobile disk 20 against the metallic members 17, 23 would not be so efficient.

It should be noted that the above-described cartridge CT according to the present invention is only made up of 24 pieces, of which four pieces are simple O-rings (3, 5, 7, 15), three pieces are other gaskets (18, 22, 24) and other two pieces are simple spiral springs (8, 16), while the thermostatic member 13 is commercially available. Therefore the pieces which have to be custom-made either in metal or ceramic are 14 only, with a consequent significant advantage in terms of manufacturing cost.

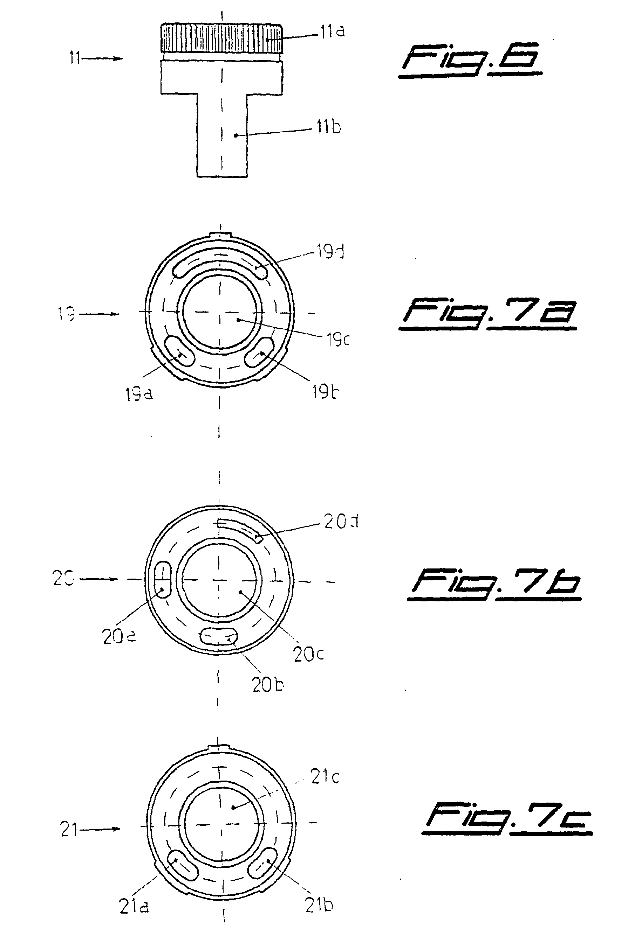

In order to reduce further the number of pieces it is possible to adopt the variation illustrated in fig. 5, wherein the five members 18-22 of the valve group are reduced to the mobile disk 20 only together with a guide insert 25. In practice, gaskets 18 and 22 are eliminated since the upper and lower fixed disks 19 and 21 are respectively incorporated into a widened body 17' and a raised base 23'. In this way, also the risk of leaks due to wear and/or wrong mounting of gaskets 18, 22 is prevented. However, this solution implies manufacturing a body 17' and a base 23' of a ceramic material same as disk 20, so as to carry out the mobile sealing between members of the same material as explained above.

Finally referring to figs. 6-7c, the control member 11 and the three disks 19, 20, 21 of the valve group are now illustrated in detail.

The control member 11 consists of a cylindrical collar 11a, whose upper portion is externally grooved, which along a portion of its circumference is extended downwards into a stem 11b. The groove of collar 11a is the groove on which the control lever LP is mounted (fig. 1), while stem 11b is the element which transmits the rotatory motion directly to the mobile disk 20.

In order to achieve said direct transmission, the upper disk 19 has not only the conventional passage ports 19a, 19b and 19c for the hot, cold and mixed water, respectively, but also an arcuate slot 19d for the passage of stem 11b. Said slot 19d extends along an angle sufficient to allow an angular travel of 45° of the control member 11, between the closed position (shown in fig. 7b) and the completely open position.

Similarly, the mobile disk 20 in addition to the three water ports 20a, 20b, 20c has also an arcuate slot 20d wherein the tip of stem 11b is inserted so as to control the rotation of the disk. It should be noted that the angular extension of slot 20d is the same as the extension of stem 11b, with a little play so as to make its insertion easier. On the contrary, it is clear that the lower disk 21 is provided only with the three water passage ports 21a, 21b and 21c, same as base 23.

It should be noted that the above-described arrangement for transmitting the flow rate adjustment allows to achieve a flow rate control which is much "lighter" than in conventional taps. In fact, in this case the control only has to overcome the friction between the mobile disk 20 and the adjacent fixed disks 19 and 21, or body 17' and base 23', which are all made of a ceramic material with a low friction coefficient. On the contrary, conventional taps include several members for transmitting the adjustment, which members must rotate within the cartridge case while overcoming the friction caused by the mounting pressure required to assure the sealing between the various members.

As mentioned above, a highly novel "aspect of the present cartridge is the division of cartridge CT into two easily separable subassemblies. In fact, in order to access the thermostatic device it is sufficient to remove knob MT and ring GF and to engage the polygonal coupling 4a with a key. By doing so it is easy to unscrew the stud (fig.4) from its threaded seat formed at the top of body 17, where it is engaged through thread 4b. In this way the thermostatic member 13, slider 14 and spring 16 may be removed from body 17 to carry out the cleaning. While performing this operation the flow rate control remains operational, since neither lever LP, nor the control member 11, nor ring GB which locks case 12 in the tap body CR with the valve group in the closed position are removed.

This results in the full achievement of the object of allowing an easy maintenance of the thermostatic device without requiring to cut off the water upstream from the tap.

It should also be noted that the control member 11 does not interfere in any way with the thermostatic device. In fact, collar 11a is inserted externally on the upper portion of body 17 which has a peripheral slot extending along an angle equal to the angle of slot 19d. In this way stem 11b can engage slot 20d by passing through slot 19d, and it can rotate the mobile disk 20 under the direct action of lever LP keyed onto collar 11a. This adjustment obviously does not affect the thermostatic member 13 which is housed inside body 17.

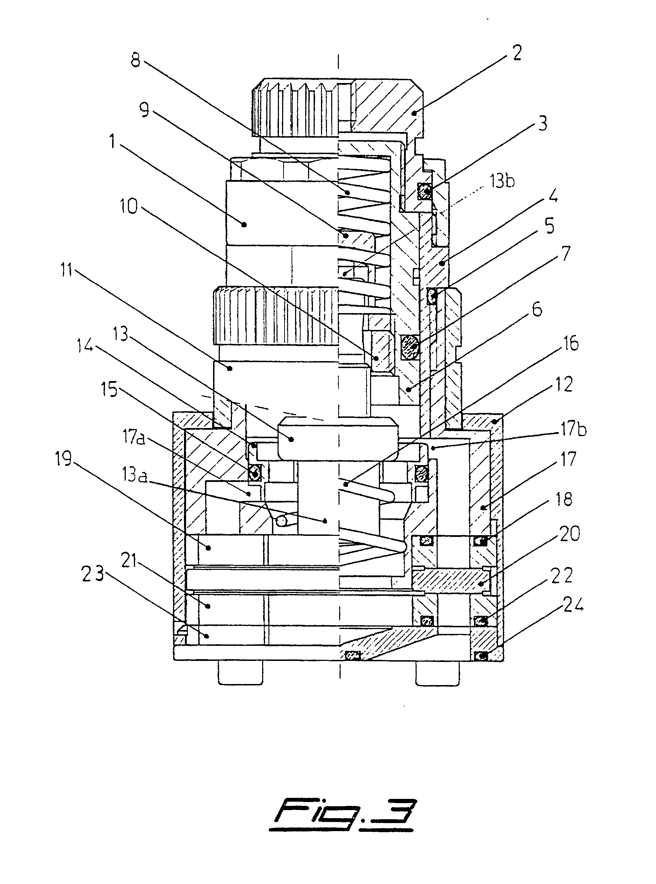

The operation of the thermostatic device of the present cartridge is similar to that of conventional thermostatic cartridges and is therefore described in brief herebelow with reference to fig.3.

It is based on the thermostatic member 13 which, according to the mixed water temperature detected by the bottom bulb 13a, causes the shifting of slider 14 within the mixing chamber formed in body 17, due to the push of the upper rod 13b against cap 9. The shifting of slider 14 changes the extent of aperture of the inflow ports 17a, 17b of the hot and cold water, respectively, into the mixing chamber from which the mixed water flows down through the ports 19c, 20c, 21c of the valve group. The position of the adjusting bar 6, and therefore the compression of the lower spring 16, is set by rotating cover 2 through knob MT. Also in this instance, the temperature adjustment obviously does not affect the flow rate regulated by member 11 which is outside body 17.

In this way the desired complete separation between the temperature and flow rate controls is achieved.

It is clear that the above-described and illustrated embodiment of the cartridge according to the invention is just an example susceptible of various modifications. For example, the exact shape and number of the members enclosed within case 12 may be changed, in particular disks 19, 20, 21 as well as base 23 and body 17, as previously mentioned. Furthermore, all the members may be replaced by other mechanically equivalent members, such as grooves 2a and 11 a which may be other types of rotational couplings.

## Claims

1. Cartridge mixing valve (CT) suitable to be inserted in a tap body (CR) and secured therein by locking means (GB), and provided with couplings for separate controls (LP, MT) for adjusting the flow rate through a valve group with one or more ceramic disks and the temperature through a thermostatic device, the latter including a thermostatic member (13), a slider (14) and a resilient contrast means (16) which are mobile within a mixing chamber for hot and cold water formed in a body (17), **characterized in that** said cartridge mixing valve (CT) is divided into a first upper subassembly made up of the members for transmitting the temperature adjustment and a second lower subassembly including the members for transmitting the flow rate adjustment and the valve group which carries out said adjustment, said first subassembly being removable in an assembled state from the cartridge (CT) without acting on said second subassembly which is retained in its position by said locking means (GB), the removal of the first subassembly allowing the removal of said members (13, 14, 16) of the thermostatic device which are mobile within said body (17).

2. Cartridge mixing valve according to claim 1, wherein the controls (LP, MT) for adjusting the water flow rate and temperature are fixed on its upper portion which projects from the tap body (CR), **characterized in that** the coupling for the temperature control (MT) is formed at the top of the cartridge (CT) above a coupling surface (4a) for a fixed reference member (GF), which surface is in turn formed externally on the cartridge (CT) above the coupling for the flow rate control (LP).

3. Cartridge mixing valve according to claim 2, **characterized in that** the temperature control (MT) is a knob rotatable along 360° provided along its peripheral edge with reference notches as well as with a stop button (PF) suitable to prevent the unintentional setting of an excessive temperature, and **in that** the flow rate control (LP) is a lever rotatable in a horizontal plane along an angle of at least 45°.

4. Cartridge mixing valve according to one or more of the preceding claims, **characterized in that** the first removable subassembly includes a ring (1) threaded on the inside so as to rotatably retain a grooved cover (2) together with a relevant O-ring (3) at the top of a sleeve (4) by means of a first external upper thread on said sleeve (4), through the sleeve (4) there being inserted an adjusting bar (6), with a relevant O-ring (7), provided at the top with an external thread suitable to engage a corresponding internal thread on said cover (2), said bar (6) being hollow and closed at the top so as to receive a spring (8) and a cap (9) retained from below by an insert (10) externally threaded so as to engage a corresponding internal thread on the bar (6), the sleeve (4) being also externally provided with a seat for an O-ring (5) and a second external thread (4b) suitable to engage a corresponding internal thread formed on the upper portion of the second subassembly.

5. Cartridge mixing valve according to one or more of the preceding claims, **characterized in that** the flow rate adjustment is transmitted from the flow rate control (LP) to a mobile disk (20) of the valve group through a control member (11) consisting of a cylindrical collar (11a), provided with an external surface for the coupling with said control (LP), which along a portion of its circumference is extended downwards into a stem (11b), said collar (11a) being externally inserted on the body (17) wherein the mixing chamber is formed and which has a peripheral slot along an angle sufficient to allow an angular travel of said stem (11b) of at least 45°, said mobile disk (20) being provided with a corresponding slot (20d) suitable to receive the tip of said stem (11b).

6. Cartridge mixing valve according to claim 5, **characterized in that** the valve group also includes an upper fixed disk (19) and a lower fixed disk (21) adjacent the mobile disk (20), in said upper disk (19) there being formed an arcuate slot (19d) for the passage of the stem (11b) which slot extends along an angle substantially equal to the angle of the peripheral slot in the body (17) on which the control member (11) is inserted.

7. Cartridge mixing valve according to one or more of claims 1-5, **characterized in that** in the valve group the mobile disk (20) is in contact below with a base (23') of a ceramic material and above with a guide insert (25) and a body (17') also of a ceramic material.

8. Mixing tap including a tap body (CR), a first control (MT) for adjusting the temperature and a second control (LP) for adjusting the flow rate, **characterized in that** it includes a cartridge mixing valve according to one or more of the preceding claims.

## Patentansprüche

1. Mischventilpatrone (CT), die in einen Hahnkörper (CR) eingesetzt und in demselben durch Sperrmittel (GB) befestigt werden kann und versehen ist mit Kupplungen für getrennte Betätigungsmittel (LP, MT) für die Einstellung der Durchflußmenge über eine Ventilgruppe mit einer oder mehreren Keramikscheiben und für die Einstellung der Temperatur über eine Thermostatvorrichtung, die Thermostatvorrichtung umfassend ein thermostatisches Glied (13), einen Schieber (14) und ein federndes Gegenelement (16), welche innerhalb einer in einem Körper (17) geformten Mischkammer für heißes und kaltes Wasser beweglich sind, **dadurch gekennzeichnet, daß** die genannte Mischventilpatrone (CT) aufgeteilt ist in eine erste obere Untergruppe, die die Glieder für die Übertragung der Temperatureinstellung umfaßt, und eine zweite untere Untergruppe, die die Glieder fiir die Übertragung der Durchflußmengeneinstellung und die Ventilgruppe, welche die genannte Einstellung durchführt, umfaßt, wobei die erste Untergruppe in einem zusammengebauten Zustand von der Patrone (CT) abgenommen werden kann, ohne auf die genannte zweite Untergruppe zu wirken, die durch die genannten Sperrmittel (GB) in ihrer Position gehalten wird, und wobei die Entfernung der ersten Untergruppe den Ausbau der genannten Glieder (13, 14, 16) der Thermostatvorrichtung ermöglicht, die innerhalb des genannten Körpers (17) beweglich sind.

2. Mischventilpatrone nach Anspruch 1, **dadurch gekennzeichnet, daß** die Betätigungsmittel (LP, MT) für die Einstellung von Wasserdurchflußmenge und Temperatur auf ihrem oberen Abschnitt befestigt sind, der vom Hahnkörper (CR) hervorragt, **dadurch gekennzeichnet, daß** die Kupplung für die Temperatureinstellung (MT) an der Oberseite der Patrone (CT) oberhalb einer Kuppelungsfläche (4a) für ein festes Bezugsglied (GF) geformt ist, wobei diese Fläche wiederum an der Außenseite der Patrone (CT) oberhalb der Kupplung für die Durchflußmengeneinstellung angeordnet ist.

3. Mischventilpatrone nach Anspruch 2, **dadurch gekennzeichnet, daß** das Betätigungsmittel für die Einstellung der Temperatur (MT) ein Knopf ist, der um 360° gedreht werden kann und der an seiner Umfangskante mit Bezugskerben und einem Stoppknopf (PF) versehen ist, der geeignet ist, das unbeabsichtigte Einstellen zu hoher Temperaturen zu verhindern, und **dadurch gekennzeichnet, daß** das Betätigungsmittel für die Einstellung der Durchflußmenge ein Hebel (LP) ist, der in einer horizontalen Ebene über einen Winkel von mindestens 45° gedreht werden kann.

4. Mischventilpatrone nach einem der vorstehenden Ansprüche, **dadurch gekennzeichnet, daß** die erste abnehmbare Untergruppe einen Ring (1) umfaßt, der mit einem Innengewinde versehen ist, so daß er eine gekerbte Abdeckung (2) zusammen mit einem entsprechenden O-Ring (3) mit Hilfe eines an der Oberseite einer Muffe (4) angeordneten ersten oberen Außengewindes drehbar auf der genannten Muffe (4) hält, wobei durch die Muffe (4) ein Stellstab (6) mit einem entsprechenden O-Ring (7) eingeführt ist, der an seiner Oberseite mit einem Außengewinde versehen ist, das mit einem entsprechenden Innengewinde auf der genannten Abdeckung (2) in Eingriff gebracht werden kann, wobei der genannte Stab (6) hohl und oben.geschlossen ist, so daß er eine Feder (8) und eine Kappe (9) aufnehmen kann, die von unten durch einen Einsatz (10) gehalten werden, der mit einem Außengewinde versehen ist, so daß er sich mit einem entsprechenden Innengewinde auf dem Stab (6) in Eingriff befindet, wobei die Muffe (4) außerdem auf der Außenseite einen Sitz für einen O-Ring und ein zweites Außengewinde (4b) hat, das mit einem entsprechenden Innengewinde im oberen Abschnitt der zweiten Untergruppe in Eingriff gebracht werden kann.

5. Mischventilpatrone nach einem der vorstehenden Ansprüche, **dadurch gekennzeichnet, daß** die Durchflußmengeneinstellung vom Betätigungsmittel für die Einstellung der Durchflußmenge (LP) auf eine bewegliche Scheibe (20) der Ventilgruppe übertragen wird über ein Betätigungsglied (11), umfassend einen zylindrischen Kranz (11a) mit einer äußeren Fläche für die Kupplung mit dem genannten Betätigungsmittel (LP), der sich entlang eines Abschnitts seines Umfangs nach unten zu einem Steg (11b) verlängert, wobei der genannte Kranz (11a) von außen auf den Körper (17) gesetzt wird, in dem die Mischkammer gebildet wird und der an seinem Umfang einen Schlitz über einen Winkel hat, der ausreicht, um eine Winkelbewegung des genannten Stegs (11b) um mindestens 45° zu ermöglichen, wobei die genannte bewegliche Scheibe (20) mit einem entsprechenden Schlitz (20d) versehen ist, der geeignet ist, die Spitze des genannten Stegs (11b) aufzunehmen.

6. Mischventilpatrone nach Anspruch 5, **dadurch gekennzeichnet, daß** die Ventilgruppe außerdem eine obere feststehende Scheibe (19) und eine untere feststehende Scheibe (21), die an der beweglichen Scheibe (20) anliegen, umfaßt, wobei die genannte obere Scheibe (19) mit einem bogenförmigen Schlitz (19d) für die Durchführung des Stegs (11b) versehen ist, und dieser Schlitz sich in einem Winkel erstreckt, der im wesentlichen dem Winkel des Umfangsschlitzes im Körper (17) entspricht, auf den das Betätigungsmittel (11) gesetzt wird.

7. Mischventilpatrone nach einem der Ansprüche 1 bis 5, **dadurch gekennzeichnet, daß** in der Ventilgruppe die bewegliche Scheibe (20) unten Kontakt hat mit einer Basis (23') aus einem Keramikwerkstoff und oben mit einem Führungseinsatz (25) und einem Körper (17') ebenfalls aus einem Keramikwerkstoff.

8. Mischbatterie mit einem Hahnkörper (CR), einem ersten Betätigungsmittel (MT) für die Einstellung der Temperatur und einem zweiten Betätigungsmittel (LP) für die Einstellung der Durchflußmenge, **dadurch gekennzeichnet, daß** sie eine Mischventilpatrone nach einem der vorstehenden Ansprüche umfaßt.

## Revendications

1. Vanne mélangeuse en cartouche (CT) apte à être introduite dans un corps de robinet (CR) et à y être fixée par un moyen de blocage (GB), et pourvue de raccords pour des commandes séparées (LP, MT) pour un réglage du débit d'écoulement au moyen d'un groupe de vannes avec un ou plusieurs disques céramiques et de la température au moyen d'un dispositif thermostatique, ce dernier comprenant un élément thermostatique (13), un curseur (14) et un moyen de contraste élastique (16) qui est mobile à l'intérieur d'une chambre de mélange pour l'eau chaude et l'eau froide formée dans un corps (17), **caractérisée en ce que** ladite vanne mélangeuse en cartouche (CT) est divisée en un premier sous-ensemble supérieur constitué des éléments pour transmettre le réglage de température et en un second sous-ensemble inférieur comprenant les éléments pour transmettre le réglage de débit d'écoulement et les groupes de vannes qui exécute ledit réglage, ledit premier sous-ensemble pouvant être enlevé dans un état assemblé de la cartouche (CT) sans agir sur ledit second sous-ensemble qui est retenu dans sa position par ledit moyen de blocage (GB), l'enlèvement du premier sous-ensemble permettant l'enlèvement desdits éléments (13, 14, 16) du dispositif thermostatique qui sont mobiles à l'intérieur dudit corps (17).

2. Vanne mélangeuse en cartouche selon la revendication 1, dans laquelle les commandes (LP, MT) pour régler le débit d'écoulement de l'eau et la température sont fixées sur sa partie supérieure qui fait saillie du corps de robinet (CR), **caractérisée en ce que** le raccord pour la commande de température (MT) est formé sur le dessus de la cartouche (CT) au-dessus d'une surface de raccordement (4a) pour un élément de référence fixe (GF), laquelle surface est elle-même formée extérieurement sur la cartouche (CT) au-dessus du raccord pour la commande (LP) de débit d'écoulement.

3. Vanne mélangeuse en cartouche selon la revendication 2, **caractérisée en ce que** la commande de température (MT) est un bouton pouvant être tourné sur 360°, pourvu, le long de son bord périphérique, d'encoches de référence ainsi que d'un bouton d'arrêt (PF) apte à empêcher le réglage involontaire sur une température excessive, et **en ce que** la commande (LP) de débit d'écoulement est un levier pouvant tourner dans un plan horizontal suivant un angle d'au moins 45°.

4. Vanne mélangeuse en cartouche selon l'une ou plusieurs des revendications précédentes, **caractérisée en ce que** le premier sous-ensemble amovible comprend un anneau (1) fileté sur le côté intérieur afin de retenir en rotation un couvercle à gorge (2) en même temps qu'une bague torique associée (3) en haut d'un manchon (4) au moyen d'un premier filet supérieur extérieur sur ledit manchon (4), une barre (6) de réglage étant introduite, avec une bague torique associée (7), à travers le manchon (4) et étant pourvue à la partie supérieure d'un filet extérieur apte à engager un filet intérieur correspondant sur ledit couvercle (2), ladite barre (6) étant creuse et fermée à la partie supérieure afin de recevoir un ressort (8) et un chapeau (9) retenus par le dessous par un élément rapporté (10) fileté extérieurement afin d'engager un filet intérieur correspondant sur la barre (6), le manchon (4) étant également pourvu extérieurement, d'un siège pour une bague torique (5) et d'un second filet extérieur (4b) apte à engager un filet intérieur correspondant formé sur la partie supérieure du second sous-ensemble.

5. Vanne mélangeuse en cartouche selon une ou plusieurs des revendications précédentes, **caractérisée en ce que** le réglage du débit d'écoulement est transmis depuis la commande (LP) de débit d'écoulement à un disque mobile (20) du groupe de la vanne par l'intermédiaire d'un élément de commande (11) consistant en une bague cylindrique (11a), pourvue d'une surface extérieure pour le raccordement avec ladite commande (LP), qui, sur une partie de sa circonférence, est prolongée vers le bas en une tige (11b), ladite bague (11a) étant insérée extérieurement sur le corps (17) dans lequel la chambre de mélange est formée et qui a une fente périphérique sur un angle suffisant pour permettre un déplacement angulaire de ladite tige (11b) d'au moine 45°, ledit disque mobile (20) étant pourvu d'une fente correspondante (20d) apte à recevoir l'extrémité de ladite tige (11b).

6. Vanne mélangeuse en cartouche selon la revendication 5, **caractérisée en ce que** le groupe de la vanne comprend aussi un disque fixe supérieur (19) et un disque fixe inférieur (21) à proximité immédiate du disque mobile (20), une fente incurvée (19d) étant formée dans ledit disque supérieur (19) pour le passage de la tige (11b), ladite fente s'étend sur un angle sensiblement égal à l'angle de la fente périphérique dans le corps (17) sur lequel l'élément de commande (11) est inséré.

7. Vanne mélangeuse en cartouche selon une ou plusieurs des revendications 1 à 5, **caractérisée en ce que**, dans le groupe de la vanne, le disque mobile (20) est en contact en dessous avec une base (23') d'une matière céramique et au-dessus avec un guide rapporté (25) et un corps (17') également en matière céramique.

8. Robinet mélangeur comprenant un corps de robinet (CR), une première commande (MT) pour le réglage de la température et une seconde commande (LP) pour le réglage du débit d'écoulement, **caractérisé en ce qu'**il comprend une vanne mélangeuse en cartouche selon une ou plusieurs des revendications précédentes.
